# EUROPEAN PATENT APPLICATION

(11) **EP 0 636 822 A2**
(43) Date of publication of application: **01.02.1995**
(21) Application number: 94303600.4
(22) Date of filing: 19.05.1994
(51) Int. Cl.: F16K 5/20

(54) **Ball valve**

(30) Priority: 29.06.1993 GB 9313372
(71) Applicant: T K VALVE LIMITED, Dunfermline Fife KY11 5PU (GB)
(72) Inventor: Black, Ian, Dalgety Bay, Fife KY11 5UH (GB)
(74) Representative: Ede, Eric

(57) **Abstract**

A ball valve comprises a housing having a fluid passage (4), a valve closure member (1) having curved surfaces, valve seating means (9) providing corresponding valve seat surfaces for receiving said closure member, and means for selectively engaging said closure member in said valve seat surfaces to provide for closure of said passage, wherein the valve seating means are adapted to be retracted from an operative position wherein said seat surfaces are biased into contact with the closure member (1) to a clearance position to provide access for removal of the closure member, and the said closure member has a configuration providing at least one cam surface (7) for selective engagement with the valve seating means to overcome said bias and urge said valve seating means into the clearance position.

## Description

This invention relates to ball valves and in particular to a device for facilitating the removal the ball of a ball valve from the valve seat for examination or repair.

Ball valves generally comprise a housing having a substantially spherical socket defined therein by valve seats. A ball is located within the socket and moveable between a first position in which the valve is open and a second position in which the valve is closed. In normal operation, the valve seats are biased into a position in which they contact the ball.

In order to remove the ball from the valve for example for examination or repair, the ball has to be lifted clear of the valve seats. This has in the past been done by a number of unsatisfactory methods such as by retracting the valve seats using hydraulic pistons, by providing threaded seats which are removed from the valve to release the ball, or by providing spacers between the ball and the valve seats which, when removed, allow the ball to be removed from the socket.

These known methods increase the number of components which make up the ball valve and therefore increase the cost of the valve. Furthermore, by increasing the number of components in the valve, the number of potential leak paths are increased which reduces the reliability of the valve.

The present invention aims to overcome or at least mitigate the above disadvantages associated with the known ball valves.

According to one aspect of the present invention there is provided a ball valve comprising a housing having a fluid passage, a valve closure member having curved surfaces, valve seating means providing corresponding valve seat surfaces for receiving said closure member, and means for selectively engaging said closure member in said valve seat surfaces to provide for closure of said passage, wherein the valve seating means are adapted to be retracted from an operative position wherein said seat surfaces are biased into contact with the closure member to a clearance position to provide access for removal of the closure member, and the said closure member has a configuration providing at least one cam surface for selective engagement with the valve seating means to overcome said bias and urge said valve seating means into the clearance position.

Preferably, there may be provided locking means for holding the valve seating means in the clearance position against the bias. The locking means may be in the form of one or more pins placed adjacent to or through the valve seating means in order to prevent the valve seating means from returning to the operative position.

One embodiment of the present invention will now be described by way of example only with reference to the accompanying drawings in which:
- FIGURE 1: is a schematic view of the ball of a ball valve according to one aspect of the present invention;
- FIGURE 2: is a plan view of the ball of Figure 1;
- FIGURE 3: is a plan view of the ball of Figure 1 in a normal working condition; and
- FIGURE 4: is a plan view of the ball of Figure 1 in an operative position to release the ball from the valve.

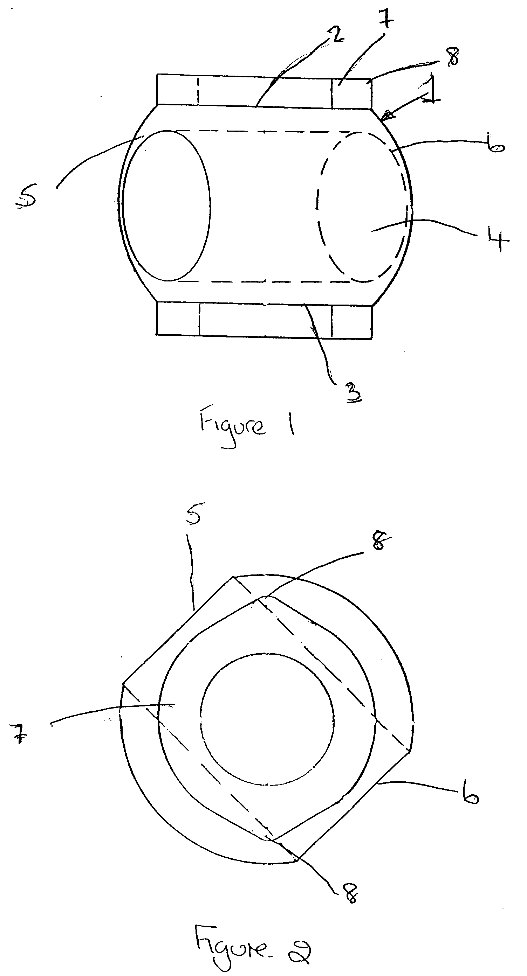

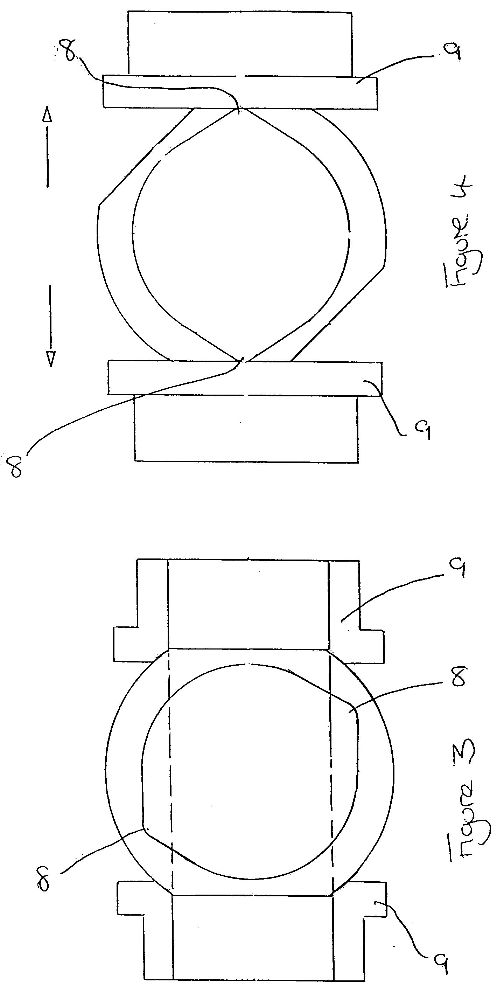

Referring now to the Figures there is shown a ball valve comprising a substantially spherical valve stopper 1, hereinafter referred to as a ball. The upper and lower surfaces 2,3 of the ball may be flat as shown in Figures 1 and 2. A bore 4 passes through the centre of the ball for the selective passage of fluid through the valve during operation. The side faces 5,6 of the ball surrounding the exits of the bore are flat. A cam profile 7 is provided on the upper surface of the ball and a pair of diametrically opposed cam lobes 8 are defined by the profile.

The ball 1 is located in a socket (not shown) defined by the valve seats 9 on either side of the ball. The seats are biased into a contact position in which the valve seats contact the ball during normal working of the valve. The biasing force may be provided by any suitable means such as spring force or hydraulic pressure.

The lobes 8 of the cam profile do not come into contact with the valve seats 9 during normal operation of the valve between an open and a closed position as shown in Figure 3. However, if it is necessary to remove the ball from the valve, for example for inspection or repair, the ball is rotated in order to bring the lobes 8 of the cam profile into contact with the valve seats. Further rotation of the ball with the lobes in contact with the valve seats forces the valve seats to retract away from the ball, against the biasing force.

The ball is further rotated until the peak of the lobes 8 is in contact with the valve seats 9 as shown in Figure 4, and the valve seats have reached their fully retracted position. The valve seats are then locked in that position by a locking means such as a pin (not shown) which may be placed adjacent to or through the valve seats. The ball is then rotated until the flat side faces are adjacent the retracted valve seats in order that it may be lifted clear of the valve seats and out of the socket.

It is envisaged that a cam surface with opposed lobes may be located on both the upper and lower surfaces of the ball as shown in Figure 1.

It will be appreciated that no additional drilling is required through the body of the valve and this therefore reduces the number of potential leak points in the valve. Furthermore, as no additional components are required, the cost of the valve is not increased.

## Claims

1. A ball valve comprising a housing having a fluid passage, a valve closure member having curved surfaces, valve seating means providing corresponding valve seat surfaces for receiving said closure member, and means for selectively engaging said closure member in said valve seat surfaces to provide for closure of said passage, wherein the valve seating means are adapted to be retracted from an operative position wherein said seat surfaces are biased into contact with the closure member to a clearance position to provide access for removal of the closure member, and the said closure member has a configuration providing at least one cam surface for selective engagement with the valve seating means to overcome said bias and urge said valve seating means into the clearance position.

2. A ball valve according to claim 1, wherein a locking means is provided for holding the valve seating means in the clearance position against the bias.

3. A ball valve according to claim 2, wherein the locking means is in the form of one or more pins placed adjacent to or through the valve seating means in order to prevent the valve seating means from returning to the operative position.

4. A ball valve according to any one of the preceding claims, wherein a cam surface is provided on the upper and lower surfaces of the closure member.

5. A ball valve according to any one of the preceding claims, wherein each cam surface is provided with two opposed cam lobes.
